# EUROPÄISCHE PATENTSCHRIFT

(11) **EP 0 606 589 B1**
(45) Veröffentlichungstag und Bekanntmachung des Hinweises auf die Patenterteilung: **12.06.1996**
(21) Anmeldenummer: 93119821.2
(22) Anmeldetag: 09.12.1993
(51) Int. Cl.: H01H 3/14, E05F 15/00, H01H 11/00

(54) **Sicherheitsschalter und Verfahren zu seiner Herstellung**
Safety switch and method of fabricating the same
Interrupteur de sécurité et méthode pour sa fabrication

(30) Priorität: 13.01.1993 DE 4300494
(43) Veröffentlichungstag der Anmeldung: 20.07.1994
(73) Patentinhaber: METEOR GUMMIWERKE K.H. BÄDJE GMBH & CO., D-31167 Bockenem (DE)
(72) Erfinder: Buchholz, Hans-Volker, D-31137 Hildesheim (DE)
(74) Vertreter: Kosel, Peter, Dipl.-Ing.

(56) Entgegenhaltungen:
- EP-A- 0 195 908
- DE-B- 2 025 735
- DE-U- 8 913 314
- US-A- 3 305 724
- US-A- 3 715 541
- US-A- 4 228 115

## Beschreibung

Die Erfindung betrifft einen Sicherheitsschalter gemäß dem Oberbegriff des Anspruchs 1 und ein Verfahren zu seiner Herstellung gemäß dem Oberbegriff des Anspruchs 10.

Ein bekannter Sicherheitsschalter dieser Art (US 3 715 541 A) ist für den Einsatz zwischen einem Sitzpolster 12 und Sitzfedern 13 bis 16 gedacht. Zwischen dem Schlauch 5 und den Leisten 1, 2 besteht ein Spiel, das Verschiebungen der Leisten 1, 2 gegeneinander zuläßt. Der Schlauch 5 ist von einem zusätzlichen flexiblen Gehäuse 6 bis 8; 17, 18 umgeben.

Aus dem Prospekt "Tastschalter" 33000 2.61 gm der Firma Herion-Werke, Stuttgart, Deutschland, ist es zu entnehmen, den unteren Kontaktstreifen in seitlichen Nuten einer isolierenden Basisschiene festzulegen und den oberen Kontaktstreifen auf hochstehende Längskanten der Basisschiene aufzulegen. Diese Einheit ist mit Spiel in einer schlauchartigen Umhüllung untergebracht, deren Enden mit Verschlußkappen durch einen PVC-Kleber abgedichtet werden. Auch hier sind Verschiebungen der Kontaktstreifen gegenüber einander nicht ausgeschlossen.

Aus dem Prospekt "FLEX-CONTACT SKS" 301.12.0892 der Firma GELBAU-Gesellschaft für Elektrobau mbH & Co. KG, Köln, Deutschland, ist es zu entnehmen, an einem flexiblen, nicht leitenden Profil im Ruhezustand im Abstand voneinander flexible leitende Profilbereiche vorzusehen. An das Profil ist, mit oder ohne zwischengeschaltete Nachlaufkammer, ein T-Fuß angeformt, der, ggf. unter Verwendung eines Gleitmittels, in einer C-Schiene verankerbar ist. Die Enden des Profils sollen gegen das Eindringen von Wasser sorgfältig geschützt werden. Dies geschieht durch Ankleben einer Abschlußkappe oder -platte mit einem Spezialklebstoff.

Aus der DE-Auslegeschrift 2 025 735 ist es an sich bekannt, die Kontaktstreifen 11, 12 in seitlichen Halteschlitzen 19, 20 im Inneren eines elastischen, isolierenden Hohlprofils 14 festzulegen. Das Hohlprofil 14 ist mit einem Fuß in einer Aufnahmenut einer flexiblen Basisschiene 15 verankert. Das Hohlprofil 14 und der größte Teil des Umfangs der Basisschiene 15 sind von einer elastischen Umhüllung 22 umschlossen. Diese Ausbildung ist aufwendig. Die Einbringung der Kontaktstreifen 11, 12 in das Hohlprofil 14 wird Schwierigkeiten bereiten.

Der Erfindung liegt die Aufgabe zugrunde, die Leisten auch im Betrieb in günstiger Betriebslage zueinander zu zentrieren.

Diese Aufgabe ist durch die Merkmale des Anspruchs 1 gelöst. Jede Leiste ist vorzugsweise als dünnes Metallband ausgebildet und kann, je nach dem Einsatzfall, zusätzlich in besonderer Weise gestaltet werden. Vorzugsweise ist als Abstandshalter entlang jeder Außenseite einer der Leisten eine biegbare Raupe aus elektrisch isolierendem Material befestigt. Bei Krafteinwirkung von außen auf den Sicherheitsschalter können sich die Leisten dann zwischen den beiden Abstandshaltern elastisch in kontaktgebende Berührung miteinander bewegen. Solche Sicherheitsschalter können an zahlreichen Stellen immer dann eingesetzt werden, wenn ein angetriebenes, bewegtes Element auf einen Widerstand trifft und aus Sicherheitsgründen zum Stillstand gebracht werden soll. Anwendungen im Kraftfahrzeugbau sind z.B. bei den Scheiben motorisch angetriebener Fensterheber, bei motorisch angetriebenen Schiebedächern und bei motorisch angetriebenen Faltverdecken und Verdeckdeckeln von Cabriolets. Bei Bussen kommen z. B. motorisch angetriebene Ausstell- oder Lüftungsklappen hinzu. Einsatzbereiche bestehen auch bei mehretagigen Kraftfahrzeug-Transportfahrzeugen an deren Hubrampe, die die wahlweise Benutzung der verschiedenen Etagen in dem Fahrzeug gestattet. Ein weiterer Einsatzbereich sind motorisch angetriebene Tore, insbesondere sogenannte Rolltore, bei denen insbesondere bei Fernsteuerung die Gefahr von Personenschäden und der Beschädigung von plötzlich auftretenden Hindernissen im Bewegungsbereich des Tores bestehen. In all diesen Fällen berührt der Sicherheitsschalter das Hindernis und sorgt über eine Änderung der Verhältnisse in dem zugehörigen elektrischen Stromkreis für unverzügliche Stillsetzung des Antriebs für das bewegte Element. Der Antrieb kann danach in beliebiger Weise entweder in die Gegenrichtung umgesteuert oder nach Entfernung des Hindernisses wieder in die ursprüngliche Bewegungsrichtung angefahren werden. Der freie Querschnitt des Schlauches in seiner noch nicht geschrumpften Ausgangsform kann so gestaltet werden, daß sowohl die Leisten, als auch ggf. damit verbundene elektronische Elemente, wie Widerstände oder Dioden, mühelos in den Schlauch eingeführt werden können. Das Schrumpfen geschieht vorzugsweise unter Wärmeeinwirkung, z.B. durch Heißluft oder Wärmestrahlung, und kann sowohl stationär als auch im Durchlaufverfahren vor sich gehen. Der lichte Querschnitt, die Wanddicke und das Material des Schlauches sind ohne weiteres auf den jeweiligen Einsatzfall optimal abzustimmen. Nach dem Schrumpfen liegen die Leisten in günstiger Betriebslage relativ zueinander zentriert, wobei jedoch der Ausgangsabstand der Leisten voneinander erhalten bleibt. Das Schrumpfen darf daher nicht soweit getrieben werden, daß die Leisten über ihre zentrierte Anlage aneinander hinaus gequetscht oder deformiert werden. Diese Bedingung ist unschwer einzuhalten.

Die Materialien gemäß Anspruch 2 sind kostengünstig und von der Handhabung her gut geeignet.

Die Merkmale des Anspruchs 3 verhindern insbesondere ein Eintreten von Feuchtigkeit in den Schlauch mit dann unkontrollierter Kontaktgabe zwischen den Leisten.

Die Verschweißung gemäß Anspruch 4 kann z.B. durch ein beheizbares Klemmwerkzeug oder mit Ultraschall geschehen.

Gemäß Anspruch 5 läßt sich auch eine einwandfreie Abdichtung des Schlauchendes im Bereich der Durchführung der Anschlußkabel erzielen.

Gemäß Anspruch 6 trägt das Profil zum Schutz und/oder zur Betätigung des Sicherheitsschalters bei. Das Material oder die Materialkombination des Profils kann in beliebiger Weise optimal auf den betreffenden Einsatzfall abgestimmt werden. Dabei braucht keine Rücksicht mehr auf die elektrische Isolation der beiden Leisten gegeneinander genommen zu werden. Das Material des Profils kann also auch elektrisch leitend sein, wenn dies andere Anforderungen an das Profil erfordern. Die elektrische Isolierung der beiden Leisten gegeneinander wird von dem umhüllenden, geschrumpften Schlauch übernommen.

Gemäß Anspruch 7 ist der Sicherheitsschalter besonders geschützt untergebracht.

Die Merkmale des Anspruchs 8 erleichtern die Einbringung des Sicherheitsschalters in den Kanal des Profils.

Gemäß Anspruch 9 ist eine Einziehlasche geschaffen, die durch ein geeignetes Einziehwerkzeug ergriffen werden kann. Der Sicherheitsschalter kann auf diese Weise besonders einfach in den Kanal eingezogen werden. Wenn in der Einbaulage die Einziehlasche stört, kann sie nach dem Einziehen abgetrennt werden. Das Einbringen des Sicherheitsschalters in den Kanal ist in jedem Fall auch deshalb besonders einfach zu bewerkstelligen, weil die Toleranzen des Kanals nicht mehr so eng bemessen sein müssen wie beim Stand der Technik. Die dauerhafte Zentrierung der beiden Leisten relativ zueinander übernimmt nicht mehr der Kanal, sondern der auf die beiden Leisten geschrumpfte Schlauch.

Die zuvor erwähnte Aufgabe ist auch durch die Verfahrensmerkmale des Anspruchs 10 gelöst.

Weitere Verfahrensmerkmale der Erfindung ergeben sich aus den Ansprüchen 11 bis 19.

Weitere Merkmale und Vorteile der Erfindung ergeben sich aus der nachfolgenden Beschreibung von Ausführungsbeispielen der Erfindung anhand der Zeichnungen. Es zeigt:
Fig. 1 eine perspektivische Ansicht eines Sicherheitsschalters vor der Schlauchschrumpfung,
Fig. 2 einen Querschnitt durch einen Sicherheitsschalter nach der Schlauchschrumpfung,
Fig. 3 einen der Fig. 2 entsprechenden Querschnitt bei Betätigung des Sicherheitsschalters,
Fig. 4 einen Längsschnitt durch die Enden des Sicherheitsschalters,
Fig. 5 die Ansicht gemäß Linie V-V in Fig. 4 und
Fig. 6 eine Stirnansicht eines Profils mit einem quer geschnittenen Sicherheitsschalter.

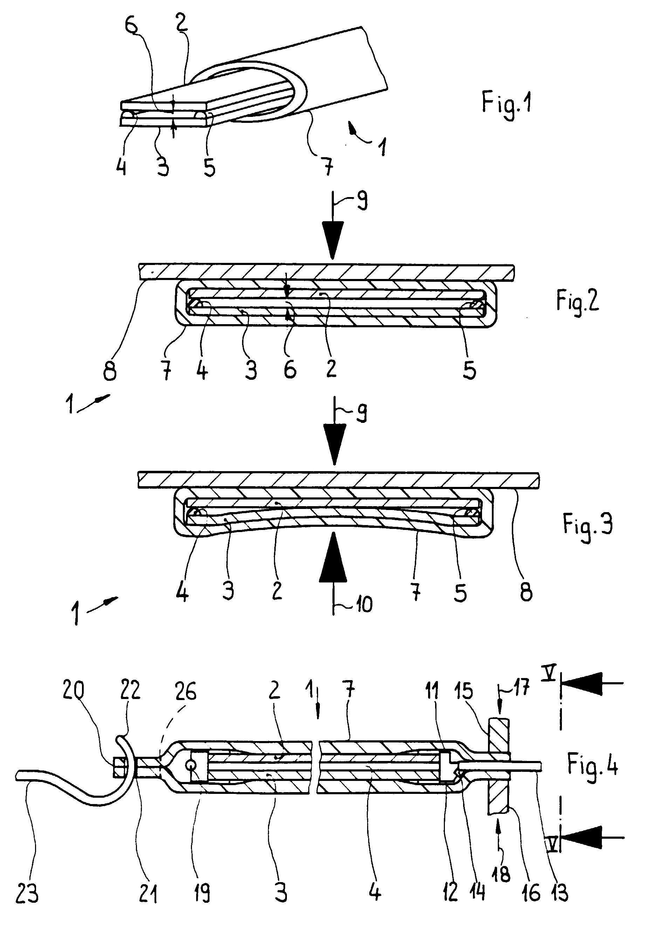

Fig. 1 zeigt einen Sicherheitsschalter 1 mit zwei elektrisch leitenden Leisten 2 und 3, die jeweils aus einem dünnen, flexiblen Metallband bestehen. Die Leisten 2, 3 werden durch zwei jeweils außen an einer Längsseite der Leiste 3 befestigte, elektrisch nicht leitende Abstandshalter 4 und 5 in einem Abstand 6 voneinander gehalten. Die Leiste 2 ist lose auf die Abstandshalter 4, 5 aufgelegt. Beide Leisten 2, 3 werden in Fig. 1 gerade in einen z.B. aus Polyethylen hergestellten Schlauch 7 eingeschoben, dessen freie Querschnittsfläche groß genug bemessen ist, um dieses Einschieben ohne Schwierigkeiten zu gestatten. Der Schlauch 7 kann in diesem Zustand allseitig Spiel gegenüber den Leisten 2, 3 aufweisen.

Sobald sich die Leisten 2, 3 vollständig innerhalb des Schlauches 7 befinden, wird der Sicherheitsschalter 1 einer äußeren Wärmeeinwirkung ausgesetzt, wodurch der schrumpffähige Schlauch 7 schrumpft und sich entsprechend Fig. 2 an die Außenkontur der Leisten 2, 3 anlegt. Dieses Anlegen geschieht so eng, daß die Leisten 2, 3 in ihrer Betriebslage gemäß Fig. 2 zentriert gehalten werden, sich also insbesondere nicht mehr seitlich gegeneinander verschieben können. Ein solches seitliches Verschieben würde nach einer gewissen Verschiebestrecke zur Berührung der Leisten 2, 3 miteinander und damit zu unerwünschter Kontaktgabe zwischen den Leisten 2, 3 führen.

Gemäß Fig. 2 ist der Sicherheitsschalter 1 auf einem Träger 8 z.B. durch Klebung befestigt. Bei dem Träger 8 kann es sich z.B. um ein durch einen Antrieb in einer durch den Pfeil 9 gekennzeichneten Richtung verschiebbares Tor handeln. Wenn jetzt die in Fig. 2 untere Fläche des Sicherheitsschalters 1 auf einen Widerstand, z.B. eine dort stehende Person, aufläuft, übt der Widerstand in Richtung des Pfeils 10 eine Kraft auf den Sicherheitsschalter 1 aus, was dazu führt, daß die Leiste 3 in diesem Fall in ihrer Quermitte so lange durchgebogen wird, bis die Leiste 3 elektrischen Kontakt mit der Leiste 2 macht. Durch diesen Kontakt werden die Verhältnisse in dem zugehörigen elektrischen Stromkreis geändert. Diese Änderung wird durch elektrische Leitungen 11 und 12 (Fig. 4) einer nicht gezeichneten Steuerschaltung mitgeteilt. Die Steuerschaltung sorgt für augenblickliche Abschaltung des Antriebs für den Träger 8, so daß verhindert wird, daß das Hindernis in der Bewegungsbahn des Trägers 8 Schaden nimmt.

Gibt das Hindernis den Sicherheitsschalter 1 wieder frei, stellen sich die Leiste 3 und die darauf liegende Schicht des Schlauches 7 elastisch wieder in ihre Ausgangslage gemäß Fig. 2 zurück. Dadurch wird der elektrische Kontakt zwischen den Leisten 2, 3 unterbrochen. Die dadurch entstehende Rückänderung der Verhältnisse in dem elektrischen Stromkreis kann dazu verwendet werden, den Antrieb des Trägers 8 wieder einzuschalten.

Fig. 4 zeigt, wie die Leitungen 11, 12 jeweils an ein stirnseitiges Ende der Leisten 2, 3 angelötet sind. Der Schlauch 7 ist an diesem Ende des Sicherheitsschalters 1 sowohl mit sich selbst als auch mit Isolationsmänteln 13 und 14 der Leitungen 11, 12 verschweißt. Diese Verschweißung geschieht z.B. durch Backen 15 und 16 eines beheizbaren Klemmwerkzeugs, die in Richtung von Pfeilen 17 und 18 auf das Ende des Schlauches 7 gedrückt werden.

An dem in Fig. 4 linken Ende des Sicherheitsschalters 1 ist zwischen die dortigen stirnseitigen Enden der Leisten 2, 3 ein elektrischer Widerstand 19 eingelötet. Die freie Querschnittsfläche des Schlauches 7 vor seiner Schrumpfung (siehe Fig. 1) ist so bemessen, daß auch der nur wenig überstehende Widerstand 19 sich ohne weiteres in den Schlauch 7 einschieben läßt.

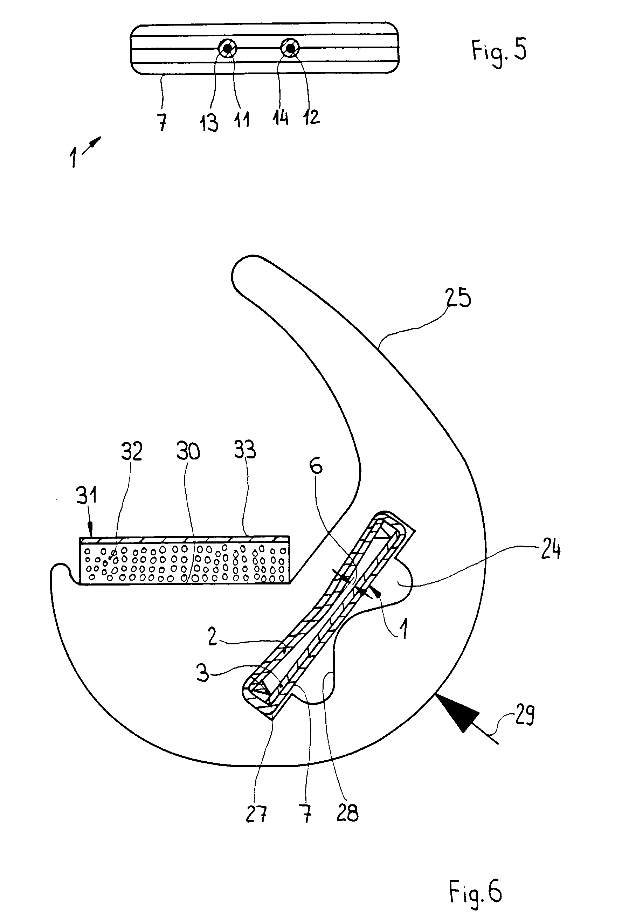

Auch das in Fig. 4 linke Ende des Schlauches 7 kann durch beheizbare Backen entsprechend den Backen 15, 16 verschweißt werden. Bei diesem Vorgang ist im Fall der Fig. 4 eine Einziehlasche 20 aus einer geringen Überlänge des Schlauches 7 hergestellt worden. Durch eine Durchbrechung 21 der Einziehlasche 20 ist ein Haken 22 eines Einziehwerkzeugs 23 gesteckt. Mit dem Einziehwerkzeug 23 läßt sich der gesamte Sicherheitsschalter 1 z.B. in einen Kanal 24 (Fig. 6) eines Profils 25 einziehen. Sobald dieses Einziehen beendet ist, kann die Einziehlasche 20 längs einer in Fig. 4 gestrichelt eingetragenen Ebene 26 abgetrennt werden.

Fig. 5 zeigt, daß nach dem Klemmen durch die beheizbaren Backen 15, 16 das Material des Schlauches 7 allseitig mit den Isolationsmänteln 13, 14 hermetisch verschweißt ist. Zweckmäßigerweise wird dazu das Material des Isolationsmantels in seiner Zusammensetzung an das Material des Schlauches 7 angepaßt. Dadurch wird die chemische Anbindung beider Materialien aneinander während des Verschweißens gefördert.

Gemäß Fig. 6 besteht das Profil 25 aus Gummi oder einem Gummiersatzstoff. Das Profil 25 ist durchgehend mit dem Kanal 24 versehen, in den der im wesentlichen Fig. 2 entsprechende Sicherheitsschalter 1 z.B. auf die in Fig. 4 erläuterte Weise mit dem Einziehwerkzeug 23, eingezogen worden ist. Dieses Einziehen wird dadurch erleichtert, daß der Sicherheitsschalter 1 mit einem geringfügigen Spiel in den gegenüberliegenden Aufnahmeflächen des Kanals 24 geführt ist. Das Einziehen kann ferner dadurch erleichtert werden, daß die sich auf diese Weise berührenden Gegenflächen des Schlauches 7 und einer Innenwand 27 des Kanals 24 mit einem verhältnismäßig geringen Gleitreibungskoeffizienten ausgestattet werden. Dies kann einerseits durch Beschichtung und andererseits durch Wahl eines entsprechenden Materials für das Profil 25 und/oder den Schlauch 7 geschehen.

An der von der Leiste 2 abgewandten Seite der Leiste 3 liegt ein durchgehender Wulst 28 des Profils 25 mittig an. Wenn nun z.B. dann, wenn beim motorischen Schließen eines Kraftfahrzeugfensters Finger zwischen der Scheibe und dem Rahmen eingequetscht zu werden drohen, in Richtung eines Pfeils 29 eine Kraft auf das Profil 25 ausgeübt wird, übt der Wulst 28 eine entsprechende Druckkraft auf den Schlauch 7 und die Leiste 3 so lange aus, bis der Abstand 6 zu Null wird und die Kontaktgabe erfolgt. Dadurch wird der Antrieb für den Fensterheber sofort abgeschaltet oder gar in der Drehrichtung umgekehrt, so daß der eingeklemmte Gegenstand wieder frei wird.

Auf eine Aufnahmefläche 30 des Profils 25 ist eine doppelseitig klebende Selbstklebefolie 31 aufgeklebt. Die Selbstklebefolie 31 weist eine geschäumte Mittelschicht 32 auf und ist bis zum Einbau des Profils 25 mit einem Liner 33 abgedeckt.

## Patentansprüche

1. Sicherheitsschalter (1)
mit zwei elektrisch leitenden Leisten (2,3),
wobei die Leisten (2,3) durch wenigstens einen, elektrisch nicht leitenden Abstandshalter (4,5) in einem Abstand (6) voneinander gehalten sind,
wobei wenigstens eine (3) der Leisten (2,3) flexibel gestaltet ist, so daß sie in die Lage versetzt ist, unter Einwirkung einer äußeren Kraft (10;29) den Abstand (6) zwischen den Leisten (2,3) zu Null werden zu lassen und in Berührung mit der anderen Leiste (2) zu treten,
und wobei die Leisten (2,3) innerhalb eines Schlauches (7) aus einem elektrisch isolierenden, flexiblen Material angeordnet sind,
dadurch gekennzeichnet, daß die lose übereinander liegenden Leisten (2,3) innerhalb eines in Berührung mit den Leisten (2,3) geschrumpften Schlauches (7) zueinander zentriert sind.

2. Sicherheitsschalter nach Anspruch 1, dadurch gekennzeichnet, daß der Schlauch (7) aus einem Thermoplast, z.B. Polyethylen oder Polypropylen, oder aus einer Mischung unterschiedlicher Thermoplaste besteht.

3. Sicherheitsschalter nach Anspruch 1 oder 2, dadurch gekennzeichnet, daß der Schlauch (7) an seinen Enden hermetisch dicht verschlossen ist.

4. Sicherheitsschalter nach Anspruch 3, dadurch gekennzeichnet, daß die Enden verschweißt sind.

5. Sicherheitsschalter nach Anspruch 3 oder 4, dadurch gekennzeichnet, daß eines der Enden mit sich und einem Isolationsmantel (13,14) von Anschlußkabeln (11,12) der Leisten (2,3) verschweißt ist.

6. Sicherheitsschalter nach einem der Ansprüche 1 bis 5, dadurch gekennzeichnet, daß der Sicherheitsschalter (1) mit einem elastischen Profil (25), z.B. einem Dicht- und/oder Kantenschutzprofil, verbunden ist.

7. Sicherheitsschalter nach Anspruch 6, dadurch gekennzeichnet, daß der Sicherheitsschalter (1) in einem Kanal (24) des Profils (25) angeordnet ist.

8. Sicherheitsschalter nach Anspruch 7, dadurch gekennzeichnet, daß eine Innenwand (27) des Kanals (24) und/oder eine Außenfläche des Schlauches (7) mit einem verhältnismäßig geringen Gleitreibungskoeffizienten ausgestattet ist.

9. Sicherheitsschalter nach Anspruch 7 oder 8, dadurch gekennzeichnet, daß an ein Ende des Schlauches (7) eine gegebenenfalls abtrennbare Einziehlasche (20) angeformt ist.

10. Verfahren zur Herstellung eines Sicherheitsschalters (1) mit folgenden Schritten:
a) Zwei elektrisch leitende Leisten (2,3) werden in einem Abstand (6) voneinander angeordnet,
b) der Abstand (6) gemäß a) wird durch wenigstens einen, elektrisch nicht leitenden Abstandshalter (4,5) aufrechterhalten,
c) wenigstens eine (3) der Leisten (2,3) gemäß a) wird flexibel gestaltet, so daß sie in die Lage versetzt wird, unter Einwirkung einer äußeren Kraft (10;29) den Abstand (6) gemäß a) örtlich zu Null werden zu lassen und in Berührung mit der anderen Leiste (2) zu treten, und
d) die Leisten (2,3) werden mit Spiel in einen Schlauch (7) aus einem elektrisch isolierenden und flexiblen Material eingeführt,
gekennzeichnet durch folgende Schritte:
e) Für den Schlauch (7) wird ein schrumpffähiges Material verwendet, und
f) der Schlauch (7) wird derart in Berührung mit den Leisten (2,3) geschrumpft, daß zwar die Leisten (2,3) zueinander zentriert werden, der Abstand (6) der Leisten (2,3) voneinander ohne Einwirkung der äußeren Kraft jedoch erhalten bleibt.

11. Verfahren nach Anspruch 10, dadurch gekennzeichnet, daß als Material für den Schlauch (7) ein Thermoplast, z.B. Polyethylen oder Polypropylen, oder eine Mischung aus unterschiedlichen Thermoplasten gewählt wird.

12. Verfahren nach Anspruch 10 oder 11, dadurch gekennzeichnet, daß der Schlauch (7) an seinen Enden hermetisch dicht verschlossen wird.

13. Verfahren nach Anspruch 12, dadurch gekennzeichnet, daß die Enden verschweißt werden.

14. Verfahren nach Anspruch 12 oder 13, dadurch gekennzeichnet, daß eines der Enden mit sich und einem Isolationsmantel (13,14) von Anschlußkabeln (11,12) der Leisten (2,3) verschweißt wird.

15. Verfahren nach einem der Ansprüche 10 bis 14, dadurch gekennzeichnet, daß der Sicherheitsschalter (1) mit einem elastischen Profil (25) z.B. Dicht- und/oder Kantenschutzprofil, verbunden wird.

16. Verfahren nach Anspruch 15, dadurch gekennzeichnet, daß der Sicherheitsschalter (1) in einen Kanal (24) des Profils (25) eingeführt wird.

17. Verfahren nach Anspruch 16, dadurch gekennzeichnet, daß eine Innenwand (27) des Kanals (24) und/oder eine Außenfläche des Schlauches (7) mit einem verhältnismäßig geringen Gleitreibungskoeffizienten ausgestattet wird.

18. Verfahren nach Anspruch 16 oder 17, dadurch gekennzeichnet, daß an ein Ende des Schlauches (7) eine Einziehlasche (20) angeformt wird.

19. Verfahren nach Anspruch 18, dadurch gekennzeichnet, daß die Einziehlasche (20) nach dem Einziehen des Schicherheitsschalters (1) in den Kanal (24) von dem Schlauch (7) abgetrennt (26) wird.

## Claims

1. Safety switch (1) comprising two electrically conductive strips (2,3),
wherein the strips (2,3) are held at a distance (6) from each other by at least one electrically non-conductive spacer (4,5),
wherein at least one (3) of the strips (2,3) is made flexible so that it is displaceable into the position in which the spacing (6) between the strips (2,3) is reduced to zero upon the application of an external force (10; 29) and thereby comes into contact with the other strip (2),
and wherein the strips (2,3) are arranged within a sleeve (7) of an electrically insulating, flexible material,
characterised in that the strips (2,3) lying freely above one another are centred in relation to each other within a sleeve (7) which is shrunk into contact with the strips (2,3).

2. Safety switch according to claim 1, characterised in that the sleeve (7) consists of a thermoplastic material, for example polyethylene or polypropylene, or a mixture of different thermoplastic materials.

3. Safety switch according to claim 1 or 2, characterised in that the sleeve (7) is hermetically sealed at its ends.

4. Safety switch according to claim 3, characterised in that the ends are welded.

5. Safety switch according to claim 3 or 4, characterised in that one of the ends is welded to itself and also to insulating sheaths (13, 14) of connecting cables (11, 12) for the strips (2,3).

6. Safety switch according to one of claims 1 to 5, characterised in that the safety switch (1) is connected to an elastic profile member (25), for example a sealing profile member and/or an edge-protecting profile member.

7. Safety switch according to claim 6, characterised in that the safety switch (1) is arranged in a channel (24) of the profile member (25).

8. Safety switch according to claim 7, characterised in that one internal wall (27) of the channel (24) and/or an outer surface of the sleeve (7) has a comparatively low coefficient of sliding friction.

9. Safety switch according to claim 7 or 8, characterised in that at one end of the sleeve (7) there is provided a drawing tongue (20) which may be separable.

10. Method for the manufacture of a safety switch (1) comprising the following steps:
(a) two electrically conductive strips (2,3) are arranged at a distance (6) from one another,
(b) the spacing (6) according to (a) is maintained by at least one electrically non-conductive spacer (4,5),
(c) at least one (3) of the strips (2,3) according to (a) is made flexible so that it is displaceable into the position in which the spacing (6) according to (a) is reduced locally to zero upon the application of an external force (10;29) and thereby comes into contact with the other strip (2), and
(d) the strips (2,3) are introduced with play into a sleeve (7) of an electrically insulating and flexible material,
characterised by the following steps:
(e) a shrinkable material is used for the sleeve (7), and
(f) the sleeve (7) is shrunk into contact with the strips (2,3) in such a manner that the strips (2,3) are centred in relation to each other, while the spacing (6) of the strips (2,3) from one another is maintained in the absence of the external force.

11. Method according to claim 10, characterised in that a thermoplastic material, for example polyethylene or polypropylene, or a mixture of different thermoplastic materials, is chosen as the material for the sleeve (7).

12. Method according to claim 10 or 11, characterised in that the sleeve (7) is hermetically sealed at its ends.

13. Method according to claim 12, characterised in that the ends are welded.

14. Method according to claim 12 or 13, characterised in that one of the ends is welded to itself and to insulating sheaths (13, 14) of connecting cables (11,12) for the strips (2,3).

15. Method according to one of claims 10 to 14, characterised in that the safety switch (1) is connected to an elastic profile member (25), for example a sealing profile member and/or an edge-protecting profile member.

16. Method according to claim 15, characterised in that the safety switch (1) is introduced into a channel (24) of the profile member (25).

17. Method according to claim 16, characterised in that an internal wall (27) of the channel (24) and/or an external surface of the sleeve (7) has a comparatively low coefficient of sliding friction.

18. Method according to claim 16 or 17, characterised in that a drawing tongue (20) is formed at one end of the sleeve (7).

19. Method according to claim 18, characterised in that the drawing tongue (20) is separated (26) from the sleeve (7) after the drawing of the safety switch (1) into the channel (24).

## Revendications

1. Interrupteur de sécurité (1), comportant deux lames (2, 3) conductrices de l'électricité,
ces lames (2, 3) étant maintenues à une certaine distance (6) l'une de l'autre par au moins un écarteur (4, 5) non conducteur de l'électricité,
au moins l'une (3) des lames (2, 3) étant réalisée flexible, de telle façon qu'elle est capable de ramener à zéro, sous l'effet d'une force extérieure (10; 29), la distance (6) entre les lames (2, 3) et d'entrer en contact avec l'autre lame,
et les lames (2, 3) étant disposées à l'intérieur d'un tube souple (7) constitué d'un matériau flexible et isolant électriquement,
caractérisé en ce que les lames (2, 3) placées libres l'une au-dessus de l'autre sont centrées l'une par rapport à l'autre à l'intérieur d'un tube souple (7), rétracté pour être en contact avec les lames (2, 3).

2. Interrupteur de sécurité suivant la revendication 1, caractérisé en ce que le tube souple (7) est constitué d'une matière thermoplastique, par exemple de polyéthylène ou de polypropylène, ou d'un mélange de différentes matières thermoplastiques.

3. Interrupteur de sécurité suivant la revendication 1 ou la revendication 2, caractérisé en ce que le tube souple (7) est fermé de façon hermétiquement étanche à ses extrémités.

4. Interrupteur de sécurité suivant la revendication 3, caractérisé en ce que les extrémités sont soudées.

5. Interrupteur de sécurité suivant la revendication 3 ou la revendication 4, caractérisé en ce que l'une des extrémités est soudée avec elle-même et avec une gaine isolante (13, 14) de câbles de raccordement (11, 12) des lames (2, 3).

6. Interrupteur de sécurité suivant l'une des revendications 1 à 5, caractérisé en ce que cet interrupteur de sécurité (1) est lié à un profilé élastique (25), par exemple à un profilé d'étanchéité et/ou de protection d'arête.

7. Interrupteur de sécurité suivant la revendication 6, caractérisé en ce que l'interrupteur de sécurité (1) est disposé dans un canal (24) du profilé (25).

8. Interrupteur de sécurité suivant la revendication 7, caractérisé en ce qu'une paroi intérieure (27) du canal 24 et/ou une surface externe du tube souple (7) est réalisée avec un coefficient de glissement relativement faible.

9. Interrupteur de sécurité suivant la revendication 7 ou la revendication 8, caractérisé en ce que, sur une extrémité du tube souple (7), est moulée une patte d'insertion (20).

10. Procédé de fabrication d'un interrupteur de sécurité (1), comportant les étapes suivantes:
a) deux lames (2, 3) conductrices de l'électricité sont disposées à une certaine distance (6) l'une de l'autre,
b) la distance (6) suivant a) est maintenue par, au moins, un écarteur (4, 5) non conducteur de l'électricité,
c) au moins l'une (3) des lames (2, 3) suivant a) est réalisée flexible, de telle façon qu'elle soit capable de ramener localement à zéro, sous l'effet d'une force extérieure (10; 29), la distance (6) entre les lames (2, 3) et d'entrer en contact avec l'autre lame,
d) les lames (2, 3) sont insérées avec jeu dans un tube souple (7) constitué d'un matériau flexible et isolant électriquement,
caractérisé par les étapes suivantes:
e) pour le tube souple (7), on utilise un matériau rétractable, et
f) le tube souple (7) est rétracté pour venir en contact avec les lames (2, 3), de telle façon que les lames (2, 3) soient centrées l'une par rapport à l'autre , mais que toutefois la distance (6) des lames (2, 3) l'une par rapport à l'autre se conserve si la force extérieure n'agit pas.

11. Procédé suivant la revendication 10, caractérisé en ce que, comme matériau pour le tube souple (7), une matière thermoplastique, par exemple du polyéthylène ou du polypropylène, ou un mélange de différents thermoplastiques, est choisi.

12. Procédé suivant la revendication 10 ou la revendication 11, caractérisé en ce que le tube souple (7) est fermé, à ses extrémités, de façon hermétiquement étanche.

13. Procédé suivant la revendication 12, caractérisé en ce que les extrémités sont soudées.

14. Procédé suivant la revendication 12 ou la revendication 13, caractérisé en ce que l'une des extrémités est soudée avec elle-même et avec une gaine isolante (13, 14) des câbles de raccordement (11, 12) des lames (2, 3).

15. Procédé suivant l'une des revendications 10 à 14, caractérisé en ce que l'interrupteur de sécurité (1) est fixé à un profilé élastique (25), par exemple à un profilé d'étanchéité et/ou de protection d'arête.

16. Procédé suivant la revendication 15, caractérisé en ce que l'interrupteur de sécurité (1) est inséré dans un canal (24) du profilé (25).

17. Procédé suivant la revendication 16, caractérisé en ce qu'une paroi intérieure (27) du canal (24) et/ou une surface externe du tube souple (7) est réalisée avec un coefficient de glissement relativement faible.

18. Procédé suivant la revendication 16 ou la revendication 17, caractérisé en ce que, sur une extrémité du tube souple (7), est moulée une patte d'insertion (20).

19. Procédé suivant la revendication 18, caractérisé en ce que la patte d'insertion (20), après l'introduction de l'interrupteur de sécurité (1) dans le canal (24), est séparée du tube souple (7).
